# FASCICULE DE BREVET EUROPEEN

(11) **EP 2 710 820 B1**
(45) Date de publication et mention de la délivrance du brevet: **15.03.2017**
(21) Numéro de dépôt: 12718214.5
(22) Date de dépôt: 02.05.2012
(51) Int. Cl.: H04W 48/12

(54) **SYSTÈME DE COMMUNICATION, ET PROCÉDÉ, PROGRAMME D'ORDINATEUR ET MOYENS DE STOCKAGE CORRESPONDANTS**
KOMMUNIKATIONSSYSTEM UND ENTSPRECHENDES VERFAHREN, COMPUTERPROGRAMM UND SPEICHERVORRICHTUNG
COMMUNICATION SYSTEM AND CORRESPONDING METHOD, COMPUTER PROGRAM, AND STORAGE MEANS

(30) Priorité: 17.05.2011 FR 1154262
(43) Date de publication de la demande: 26.03.2014
(73) Titulaire: Safran Electronics & Defense, 92100 Boulogne-Billancourt (FR)
(72) Inventeur: BARD, Yves, F-75015 Paris (FR); ALLARD, Géraud, F-75015 Paris (FR); RAYMOND, Gilles, F-75015 Paris (FR); COURTET, Patrice, F-75015 Paris (FR)
(74) Mandataire: Le Guen-Maillet
(86) Numéro de dépôt international: PCT/EP2012/058020
(87) Numéro de publication internationale: WO 2012/156202

(56) Documents cités:
- WO-A1-01/17290
- WO-A1-2011/050519
- US-A1- 2010 020 760

## Description

La présente invention concerne le domaine des systèmes de communication radio cellulaire et plus particulièrement des systèmes de communication reposant sur des accès multiples par division temporelle et par division fréquentielle.

Les systèmes de communication radio cellulaire permettent à des dispositifs, appelés combinés ou terminaux mobiles, de communiquer entre eux via au moins un autre dispositif, appelé base. Un dispositif, qu'il soit un combiné ou une base, est plus généralement appelé noeud de communication.

Chaque base gère une cellule et émet périodiquement un signal, appelé balise (*beacon* en anglais), qui permet aux combinés présents dans la zone de couverture de la cellule de se synchroniser avec la base pour établir des communications et échanger des informations de gestion du système de communication.

De tels systèmes de communication radio connus utilisent un mécanisme d'accès multiple par division temporelle TDMA (*Time Division Multiple Access* en anglais). Dans ces systèmes, le temps est divisé en trames servant à cadrer la communication. Chaque trame est elle-même divisée en intervalles de temps (*time slot* en anglais) de durée prédéfinie, pour partager le temps d'accès au support de transmission entre les noeuds de communication. De tels système peuvent en outre utiliser un mécansime d'accès multiple par division fréquentielle FDMA (*Frequency Division Multiplie Access* en anglais). Par exemple, les systèmes de télécommunications sans-fil numériques améliorées DECT (marque déposée), pour *Digital Enhanced Cordless Telecommunications*, tel que spécifié dans la série de documents ETS 300 175 publiés par l'institut ETSI (*European Telecommunications Standard Institute* en anglais), utilisent des principes de transmission de type TDMA et FDMA.

De tels systèmes de communication TDMA et FDMA peuvent être mobiles. C'est à dire que les combinés comme les bases peuvent être mobiles. Dans ces systèmes de communication TDMA et FDMA mobiles, les conditions de transmission entre les noeuds de communication peuvent changer rapidement, par exemple par apparition d'un phénomène de brouillage de signal ou par évanouissement (*fading* an anglais) du signal par apparition d'obstacle entre les noeuds de communication. Les canaux de communication établis entre les noeuds de communication peuvent alors subir des interférences nuisibles à la communication, voire devenir inutilisables.

Bien que les standards de communication radio cellulaire prévoient un mécanisme de transfert automatique (*handover* en anglais) d'un combiné vers une autre base, sa mise en place n'est pas suffisamment rapide pour permettre de contrer des phénomènes dits d'atténuation rapide ou de masquage rapide (*fast fading or fast shadowing* en anglais).

De plus, de tels phénomènes d'atténuation rapide ou de masquage rapide peuvent n'être détectés que par un sous-ensemble des noeuds de communication. Une telle situation doit être notifiée au reste du système de communication, de manière à ce qu'une redéfinition des canaux de communication et des rôles base-combiné puisse être mise en oeuvre au plus vite. Les mécanismes de transfert automatique précédemment évoqués ne sont pas suffisamment réactifs dans ce type de situation.

La demande de brevet publiée sous la référence WO 01/ 17290 A1 divulgue un système de diffusion de messages adapté pour transmettre de multiples messages de diffusion simultanés dans un Système de télécommunication.

Il est souhaitable de pallier ces différents inconvénients de l'état de la technique.

Il est notamment souhaitable de fournir une solution qui permette d'améliorer la réactivité de systèmes de communication composés de noeuds de communication mobiles, et plus particulièrement dans le cadre de transmissions de type TDMA et FDMA, lors de changements rapides des conditions de transmission.

Il est notamment souhaitable de fournir une solution qui permette d'améliorer la réactivité de tels systèmes de communication lorsqu'apparaissent des phénomènes de brouillage, d'atténuation rapide ou de masquage rapide.

Il est notamment souhaitable de fournir une solution qui permette à un combiné de se synchroniser rapidement sur une nouvelle base, lorsque la communication avec la base sur laquelle il était attaché est rompue.

Il est notamment souhaitable de fournir une solution qui permette de diffuser rapidement, dans de tels systèmes de communication, des informations de changement de conditions de transmission.

L'invention concerne un système de communication comportant des noeuds de communication communiquant par le biais de trames de type à accès multiple par division temporelle et par division fréquentielle, lesdits noeuds formant un réseau radio cellulaire hiérarchique définissant des niveaux hiérarchiques comportant chacun une base et au moins un combiné, ledit système étant adapté de sorte que les noeuds de communication sont autorisés à communiquer via la base de leur niveau hiérarchique. Le système est tel qu'un noeud de communication, dit noeud maître, comporte : des moyens pour sélectionner dans chacune desdites trames une ressource de transmission commune auxdits noeuds de communication, dite ressource de transmission commune au voisinage réseau ; des moyens pour diffuser auxdits noeuds de communication, au travers des niveaux hiérarchiques via leurs bases respectives, une information représentative de la ressource de transmission commune sélectionnée. Le système est en outre adapté pour autoriser lesdits noeuds de communication à diffuser des messages via la ressource de transmission commune sélectionnée. Ainsi, en permettant aux noeuds de communication de transmettre des données de manière à diffuser via la ressource de transmission commune au voisinage réseau, en plus des communications via la base de leur niveau hiérarchique, le système de communication est plus réactif.

Selon un mode de réalisation particulier, ledit noeud maître comporte des moyens pour obtenir des informations représentatives de conditions de transmission entre lesdits noeuds de communication et les moyens pour sélectionner la ressource de transmission commune au voisinage réseau sont adaptés pour effectuer la sélection en fonction desdites informations obtenues. Ainsi, le système de communication est d'autant plus réactif lorsqu'apparaissent des phénomènes de brouillage, d'atténuation rapide ou de masquage rapide.

Selon un mode de réalisation particulier, lesdits noeuds de communication comportent des moyens pour déterminer des conditions de transmission dans ledit système de communication et des moyens pour transmettre des messages comportant des informations représentatives de conditions de transmission, ou de changement de conditions de transmission soit via la ressource de transmission commune au voisinage réseau, soit via la base de leur niveau hiérarchique.

Selon un mode de réalisation particulier, lesdits noeuds de communication comportent des moyens pour diffuser via la ressource de transmission commune au voisinage réseau des messages comportant des informations de synchronisation identifiant une ressource desdites trames utilisée pour transmettre un signal de balise. Ainsi, un noeud pour lequel le canal de communication avec la base de son niveau hiérarchique est rompu peut se réinsérer au plus vite dans le système.

Selon un mode de réalisation particulier, lesdits noeuds de communication comportant des fonctions de combiné et de base, lesdits noeuds de communication comportent : des moyens pour détecter un risque de perte de connectivité avec un noeud de communication ; des moyens pour activer un signal de balise, lorsqu'un risque de perte de connectivité est détecté ; des moyens pour diffuser via la ressource de transmission commune au voisinage réseau un message comportant des informations de synchronisation identifiant une ressource desdites trames, utilisée pour transmettre ledit signal de balise. Ainsi, la connectivité du système de communication est améliorée.

Selon un mode de réalisation particulier, la base de chaque niveau hiérarchique comporte des moyens pour autoriser les noeuds de communication de son niveau hiérarchique à diffuser des messages via une ressource de transmission commune audit niveau hiérarchique.

Selon un mode de réalisation particulier, la ressource de transmission commune à chaque niveau hiérarchique correspond à une ressource desdites trames ayant une position prédéfinie relativement à une ressource utilisée par la base dudit niveau hiérarchique pour transmettre un signal de balise. Ainsi, l'utilisation des ressources est optimisée.

Selon un mode de réalisation particulier, la base de chaque niveau hiérarchique comporte des moyens pour changer de ressource desdites trames, utilisée pour transmettre un signal de balise, en fonction de messages reçus via la ressource de transmission commune à son niveau hiérarchique ou via la ressource de transmission commune au voisinage réseau. Ainsi, le système de communication est plus réactif.

Selon un mode de réalisation particulier, ledit système est adapté de sorte que les bases transmettent leur signal de balise dans un intervalle de temps distinct de chaque intervalle de temps définissant la ressource de transmission commune au voisinage réseau.

L'invention concerne également un procédé de communication dans un système de communication comportant des noeuds de communication communiquant par le biais de trames de type à accès multiple par division temporelle, lesdits noeuds formant un réseau radio cellulaire hiérarchique définissant des niveaux hiérarchiques comportant chacun une base et au moins un combiné, ledit système étant adapté de sorte que les noeuds de communication sont autorisés à communiquer via la base de leur niveau hiérarchique. Le procédé est tel qu'un noeud de communication, dit noeud maître, effectue des étapes consistant à : sélectionner dans chacune desdites trames une ressource de transmission commune auxdits noeuds de communication, dite ressource de transmission commune au voisinage réseau ; diffuser auxdits noeuds de communication, au travers des niveaux hiérarchiques via leurs bases respectives, une information représentative de la ressource de transmission commune sélectionnée. Le procédé est en outre tel que lesdits noeuds de communication sont autorisés à diffuser des messages via la ressource de transmission commune sélectionnée.

L'invention concerne également un programme d'ordinateur, qui peut être stocké sur un support et/ou téléchargé d'un réseau de communication, afin d'être lu par un système informatique ou un processeur. Ce programme d'ordinateur comprend des instructions pour implémenter le procédé mentionné ci-dessus, lorsque ledit programme est exécuté par le système informatique ou le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement une structure de trame au sein de laquelle l'invention peut être mise en oeuvre ;
- la Fig. 2 illustre schématiquement un système de communication dans lequel l'invention peut être mise en oeuvre ;
- la Fig. 3 illustre schématiquement une architecture de noeud de communication du système de communication de la Fig. 2 ;
- la Fig. 4 illustre schématiquement un algorithme de mise en place d'une ressource de transmission commune au voisinage réseau ;
- la Fig. 5 illustre schématiquement un premier algorithme d'utilisation de la ressource de transmission commune au voisinage réseau ;
- la Fig. 6 illustre schématiquement un second algorithme d'utilisation de la ressource de transmission commune au voisinage réseau ;
- la Fig. 7 illustre schématiquement un algorithme de resynchronisation utilisant des informations diffusées via la ressource de transmission commune au voisinage réseau ;
- la Fig. 8 illustre schématiquement un algorithme d'amélioration de connectivité du voisinage réseau utilisant des informations transmises via la ressource de transmission commune au voisinage réseau.

Pour augmenter la réactivité de systèmes de communication de type TDMA aux changements de conditions de transmission, il est proposé de réserver dans chaque trame TDMA une ressource de transmission commune au voisinage réseau, destinée à permettre à chacun des noeuds de communication de diffuser des informations en mode non connecté (*connectionless mode* en anglais). Cette ressource de transmission commune au voisinage réseau est sélectionnée par un noeud prédéfini du système de communication préférentiellement en fonction des conditions de transmission, et est donc, dans ce cas, susceptible de varier au cours du temps. Cette ressource de transmission commune au voisinage réseau permet ainsi à tout noeud de communication de diffuser dans le système de communication des informations de synchronisation, de gestion de topologie, de détection de voisinage réseau et/ou de détection de changement de conditions de transmission, indépendamment de la base à laquelle il est attaché.

On entend par voisinage réseau l'ensemble du système de communication, c'est-à-dire l'ensemble des noeuds de communication habilités à communiquer par le biais d'une même trame.

La mise en place et l'utilisation de cette ressource de transmission commune au voisinage réseau dans chaque trame TDMA sont détaillées ci-après dans le cadre illustratif d'un système de communication de type DECT (marque déposée).

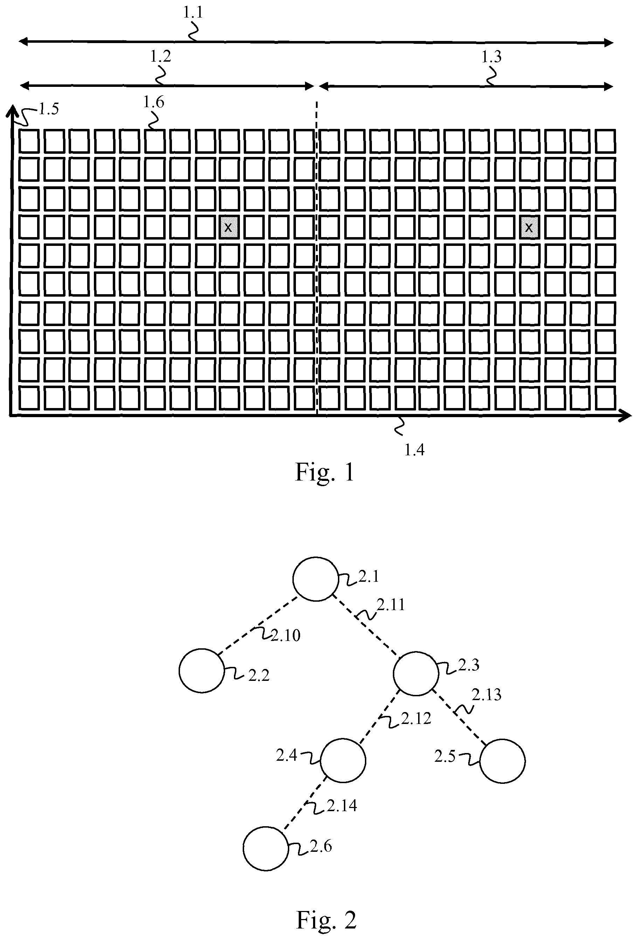

La Fig. 1 illustre schématiquement une structure de trame 1.1 au sein de laquelle l'invention peut être mise en oeuvre. La représentation de la Fig. 1 comporte deux axes : selon l'axe vertical des ordonnées, différentes fréquences porteuses sont représentées ; et selon l'axe horizontal des abscisses, différents intervalles de temps consécutifs sont représentés. La représentation de la Fig. 1 illustre par exemple une trame selon les principes de communication TDD (*Time Division Duplex* en anglais), TDMA et FDMA que l'on retrouve dans les systèmes de communication de type DECT (marque déposée).

La trame 1.1 est de durée égale à 10 ms et est divisée, selon l'axe temporel, en une première partie 1.2 consacrée aux trafics descendants (*downlink* en anglais) et une seconde partie 1.3 consacrée aux trafics montants (*uplink* en anglais). Un trafic descendant est émis par une base vers au moins un combiné, alors qu'un trafic montant est émis par un combiné vers une base. On dit alors que les communications sont semi-duplex (*half-duplex* en anglais), dans le sens où les communications descendantes et montantes ne sont pas simultanées, mais réparties sur des intervalles de temps différents.

Dans la représentation de la Fig. 1, les première 1.2 et seconde 1.3 parties sont de même durée. Chacune de ces parties est en outre décomposée en douze intervalles de temps élémentaires de même durée. Dans la représentation de la Fig. 1, la trame 1.1 est en outre divisée, selon l'axe fréquentiel, en dix fréquences porteuses.

Ainsi, la trame 1.1 comporte des unités élémentaires de communication 1.6 qui correspondent respectivement à une fréquence porteuse et à un intervalle de temps. Chaque unité élémentaire de communication 1.6 est alors définie par un couple unique fréquence / intervalle de temps. La trame 1.1 représentée sur la Fig. 1 comporte ainsi deux cent quarante unités élémentaires de communication 1.6.

Lorsque deux noeuds communiquent, un canal de transmission est défini comme un couple d'unités de communication élémentaires 1.6, une unité par sens de communication. Une première unité dans la première partie 1.2 de la trame 1.1 et une seconde unité dans la seconde partie 1.3 de la trame 1.1. Typiquement, ces unités de communication élémentaires 1.6 sont correspondantes, c'est-à-dire qu'elles utilisent la même fréquence porteuse et sont séparées par douze intervalles de temps élémentaires. Tel est le cas des unités de communication élémentaires 1.6 marquées d'une croix sur la Fig. 1, c'est-à-dire celles correspondant aux neuvième et vingt-et-unième intervalles temporels sur la septième fréquence porteuse.

Chaque unité élémentaire de communication 1.6 permet la transmission de signaux sous la forme d'un paquet de données, qui peut être composé d'un champ d'en-tête qui contient des informations de signalisation et de protocole et d'un champ de données utiles (*payload data* en anglais) qui contient les données échangées proprement dites. Typiquement, le champ de données utiles contient les échantillons audio lors d'une communication de type voix.

Pour permettre la connexion d'un combiné à une base, cette base émet un signal appelé balise (*beacon* en anglais). Ce signal utilise l'une des unités élémentaires de communication 1.6 de la première partie 1.2 de la trame 1.1. Ce signal est émis périodiquement, à chaque trame, et contient les informations de signalisation et de synchronisation nécessaires au combiné pour se connecter et se synchroniser sur la base de manière à pouvoir communiquer avec elle. Typiquement, le signal de balise émis par une base pour permettre la connexion de combinés est constitué d'informations de signalisation contenues dans le champ d'en-tête d'un paquet de données, et le champ de données utiles est alors sans signification.

La Fig. 2 illustre schématiquement un système de communication hiérarchique dans lequel l'invention peut être mise en oeuvre. Un tel système de communication peut être destiné à un ensemble d'individus, dont au moins une partie est mobile, et qui portent respectivement sur eux-mêmes des dispositifs de communication 2.1, 2.2, 2.3, 2.4, 2.5 et 2.6, aussi appelés noeuds de communication. Les communications entre noeud sont effectuées par le biais de trames au format de la trame 1.1.

Chacun des noeuds de communication 2.1, 2.2, 2.3, 2.4, 2.5 et 2.6 dispose préférentiellement des fonctions de combiné et de base.

Dans la représentation de la Fig. 2, le système de communication est dans une situation où : le noeud de communication 2.1 fonctionne comme une base pour les noeuds de communication 2.2 et 2.3 ; le noeud de communication 2.2 fonctionne uniquement comme un combiné ; le noeud de communication 2.3 fonctionne comme un combiné pour le noeud de communication 2.1 et comme une base pour les noeuds de communication 2.4 et 2.5 ; le noeud de communication 2.5 fonctionne uniquement comme un combiné ; et, le noeud de communication 2.4 fonctionne comme un combiné pour le noeud de communication 2.3 et comme une base pour le noeud de communication 2.6. Ainsi, des données peuvent être relayées par un noeud pour mettre, ou maintenir, en relation au moins deux autres noeuds. Il existe ainsi un canal de communication 2.10 entre les noeuds 2.1 et 2.2, un canal de communication 2.11 entre les noeuds 2.1 et 2.3, un canal de communication 2.12 entre les noeuds 2.3 et 2.4, un canal de communication 2.13 entre les noeuds 2.3 et 2.5, et un canal de communication 2.14 entre les noeuds 2.4 et 2.6. On peut aussi parler de liens de communication.

Excepté pour le noeud de communication 2.1 de plus haut niveau hiérarchique, appelé *maître,* chaque autre noeud de communication est attaché à une base, et peut lui-même servir de base. On obtient ainsi un arbre de communication formant un chaînage des noeuds de communication permettant que l'ensemble de ces noeuds de communication dispose d'une même référence d'horloge. L'ensemble formé par un noeud de communication agissant comme base et les noeuds de communication qui lui sont attachés est appelé *groupe* ou *niveau hiérarchique.*

Les noeuds de communication de chaque groupe peuvent communiquer entre eux par le biais de la base du groupe. Quatre unités élémentaires de communication 1.6 de la trame 1.1 sont alors nécessaires pour mettre en oeuvre une telle communication. Des informations peuvent aussi être échangées entre les groupes en remontant et/ou en descendant hiérarchiquement l'arbre de communication via les bases des groupes. Dans ces deux cas de figure, chaque base sert de relais entre les noeuds de communication, soit au sein du groupe pour lequel elle agit en tant que base, soit entre le groupe dans lequel elle agit en tant que base et celui, s'il existe, dans lequel elle agit comme combiné. En d'autres termes, le système de communication est un réseau radio cellulaire hiérarchique définissant des niveaux hiérarchiques comportant chacun une base et au moins un combiné, le système étant adapté de sorte que les noeuds de communication sont autorisés à communiquer via la base de leur niveau hiérarchique.

La ressource de transmission commune au voisinage réseau est alors un moyen de transmission d'informations alternatif aux remontées et aux descentes hiérarchiques de l'arbre de communication. La ressource de transmission commune au voisinage réseau permet d'éviter de subir des congestions qui peuvent apparaître au niveau des bases du système de communication, et ce en fournissant à tout noeud de communication un moyen de diffusion indépendant de la base à laquelle il est attaché.

Les individus étant mobiles, les conditions de transmission entre les noeuds de communication peuvent changer rapidement, par exemple par apparition d'un phénomène de brouillage de signal ou par évanouissement du signal par apparition d'obstacle entre les noeuds de communication. Les canaux de communication 2.10, 2.11, 2.12, 2.13 et 2.14 peuvent alors subir des interférences nuisibles à la communication, voire devenir inutilisables.

Par exemple, suite à un brouillage de signal, le canal de communication 2.14 devient inutilisable et le noeud de communication 2.6, agissant en tant que combiné, ne peut plus se synchroniser sur le noeud de communication 2.4, agissant en tant que base. Il est alors nécessaire que le noeud de communication 2.6 se synchronise sur un autre noeud de communication agissant en tant que base.

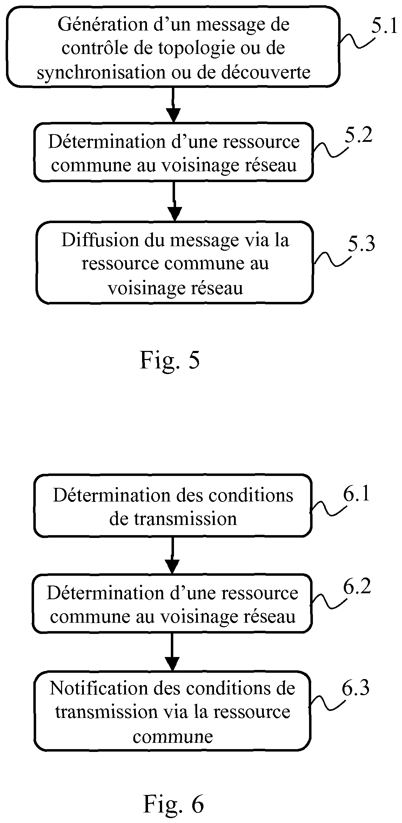

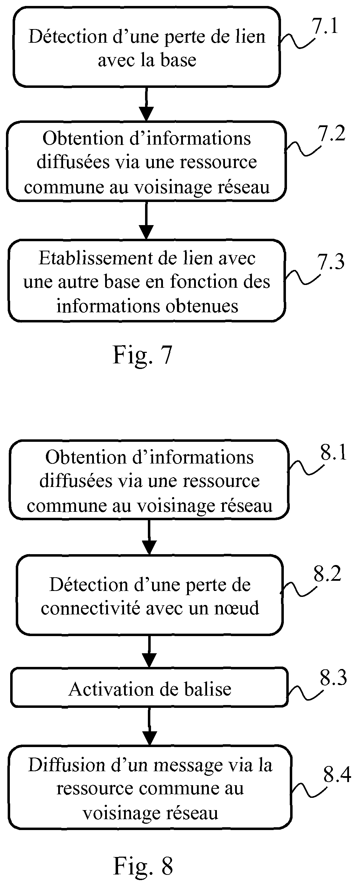

Le combiné peut alors utiliser les informations diffusées via la ressource de transmission commune au voisinage réseau pour accélérer sa resynchronisation à une base. L'utilisation de la ressource commune au voisinage réseau pour diffuser de telles informations est détaillée ci-après en relation avec la Fig. 5. Cela lui évite ainsi de balayer l'ensemble du spectre de transmission afin de détecter une balise de base sur laquelle il pourrait s'attacher. Une telle utilisation des informations diffusées via la ressource de transmission commune au voisinage réseau est décrite ci-après en relation avec la Fig. 7.

Le combiné peut aussi utiliser la ressource commune au voisinage réseau pour diffuser un message de découverte, appelé message *hello,* pour indiquer aux autres noeuds de communication qu'il est à la recherche d'une base à laquelle s'attacher. L'utilisation de la ressource commune au voisinage réseau pour diffuser un tel message est détaillée ci-après en relation avec la Fig. 5.

De plus, de tels phénomènes d'atténuation rapide ou de masquage rapide peuvent n'être détectés que par un sous-ensemble des noeuds de communication. Une telle situation doit être notifiée au reste du système de communication, de manière à ce qu'une redéfinition des canaux de communication et des rôles base-combiné puisse être mise en oeuvre au plus vite.

Le combiné peut alors utiliser la ressource de transmission commune au voisinage réseau pour diffuser des informations quant aux conditions de transmission et ainsi accélérer leur diffusion dans le système de communication. Une telle utilisation des informations diffusées via la ressource de transmission commune au voisinage réseau est décrite ci-après en relation avec la Fig. 6.

Une telle utilisation des informations diffusées via la ressource de transmission commune au voisinage réseau est particulièrement utile lorsqu'un phénomène de brouillage, de masquage rapide ou d'atténuation rapide survient entre le combiné et la base à laquelle il est attaché.

Une telle utilisation des informations diffusées via la ressource de transmission commune au voisinage réseau est aussi particulièrement utile lorsque le noeud de communication considéré agit en tant que base, que ce noeud est congestionné, et qu'un phénomène de brouillage, de masquage rapide ou d'atténuation rapide survient entre ce noeud et la base à laquelle il est attaché. En effet, dans un mode de réalisation particulier, chaque noeud de communication ne peut transmettre ou recevoir que sur une unique fréquence porteuse à chaque intervalle de temps. Ainsi, lorsqu'un noeud de communication agissant en tant que base est fortement sollicité, il n'a pas ou peu la possibilité de détecter les transmissions de balises par les autres noeuds de communication. Si la communication avec la base à laquelle il est attaché se rompt, il lui sera nécessaire de parcourir l'ensemble des fréquences porteuses à la recherche de balises, entraînant ainsi sa déconnexion du système de communication pendant plusieurs trames TDMA.

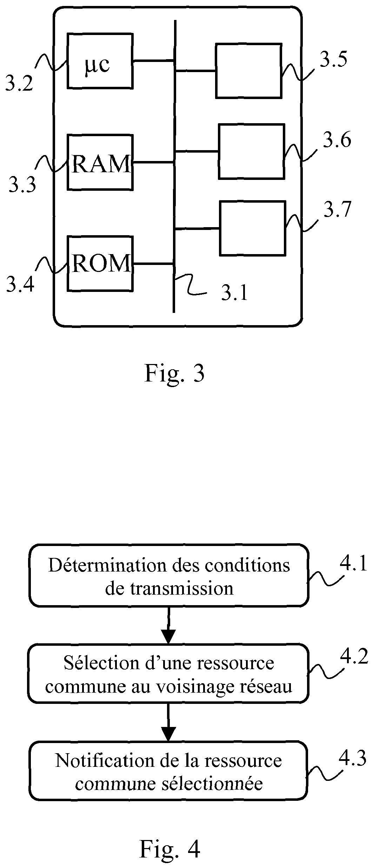

La Fig. 3 illustre schématiquement une architecture de noeud de communication du système de communication. Cette architecture comporte, reliés par un bus de communication 3.1 : un processeur, micro-processeur, microcontrôleur (noté µc) ou CPU (*Central Processing Unit* en anglais ou *Unité Centrale de Traitement* en français) 3.2 ; une mémoire vive RAM (*Random Access Memory* en anglais ou *Mémoire à Accès Aléatoire* en français) 3.3 ; une mémoire morte ROM (*Read Only Memory* en anglais ou *Mémoire à Lecture Seule* en français) 3.4 ; un lecteur 3.5 de medium de stockage, tel qu'un lecteur de carte SD (*Secure Digital Card* en anglais ou *Carte Numérique Sécurisée* en français) ; des moyens d'interface radio 3.6 ; et des moyens d'interface homme-machine 3.7.

Le microcontrôleur 3.2 est capable d'exécuter des instructions chargées dans la RAM 3.3 à partir de la ROM 3.4, d'une mémoire externe (non représentée), d'un support de stockage, tel qu'une carte SD ou autre, ou d'un réseau de communication. Lorsque le noeud de communication est mis sous tension, le microcontrôleur 3.2 est capable de lire de la RAM 3.3 des instructions et de les exécuter. Ces instructions forment un programme d'ordinateur, qui cause la mise en oeuvre, par le microcontrôleur 3.2, de tout ou partie des algorithmes décrits ci-après en relation avec les Figs. 4 à 7.

Tout ou partie des algorithmes décrits ci-après en relation avec les Figs. 4 à 7 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur, ou être implémenté sous forme matérielle par une machine ou un composant dédié, tel qu'un FPGA (*Field-Programmable Gate Array* en anglais ou *Matrice de Portes Programmable sur Champ* en français) ou un ASIC (*Application-Specific Integrated Circuit* en anglais ou *Circuit Intégré Spécifique à une Application* en français).

La Fig. 4 illustre schématiquement un algorithme de mise en place de la ressource de transmission commune au voisinage réseau.

L'algorithme illustré à la Fig. 4 est mis en oeuvre par un noeud dédié du système de communication. Il est préférentiellement mis en oeuvre par le noeud de plus haute hiérarchie, le noeud maître, c'est-à-dire le noeud de communication 2.1 dans la représentation de la Fig. 2. Le noeud maître est celui, dans le voisinage réseau, qui agit uniquement comme base, les autres noeuds de communication agissant soit comme combiné, soit comme base et combiné. Dans une variante de réalisation, ce noeud maître peut être élu parmi les noeuds du système de communication, notamment pour prendre en compte le fait que, suite à une apparition ou une disparition d'un phénomène de brouillage, de masquage rapide ou d'atténuation rapide, le système de communication peut être amené à se scinder en deux ou, respectivement, deux systèmes de communication peuvent être amenés à fusionner.

Dans une étape 4.1, le noeud maître 2.1 détermine les conditions de transmission dans le système de communication. Cette étape peut être effectuée par analyse des signaux reçus par le noeud maître 2.1 via son interface 3.6 et/ou à partir d'informations fournies par d'autres noeuds du système de communication. De telles informations peuvent être fournies soit en mode point-à-point (*unicast* en anglais) par les noeuds de communication du groupe du noeud maître, soit en mode diffusé (*broadcast* en anglais) via la ressource de transmission commune au voisinage réseau précédemment allouée. Lorsque ces informations sont fournies par les noeuds de communication du groupe du noeud maître, elles peuvent être des informations relayées par ces noeuds pour le compte de groupes de niveau hiérarchique inférieur.

Le noeud maître 2.1 détermine ainsi, dans la trame 1.1, les unités élémentaires de communication 1.6 qui, d'après les conditions de transmission, peuvent utilisées par l'ensemble des noeuds du système de communication.

Dans une étape 4.2 suivante, le noeud maître 2.1 sélectionne la ressource de transmission commune au voisinage réseau, en fonction des conditions de transmission déterminées à l'étape 4.1.

La ressource de transmission commune au voisinage réseau peut être une unique unité élémentaire de communication 1.6 ou plusieurs unités élémentaires de communication 1.6, qui peuvent alors être contiguës ou disjointes dans la représentation de la Fig. 1.

Dans une étape 4.3 suivante, le noeud maître 2.1 notifie aux autres noeuds du système de communication quelle(s) unité(s) élémentaire(s) de communication 1.6 sont allouées pour former la ressource de transmission commune au voisinage réseau. Préférentiellement, cette notification est effectuée par le noeud maître 2.1 dans la balise qu'il transmet à chaque trame 1.1. Cette notification est alors relayée par chacun des noeuds de communication du groupe du noeud maître 2.1 et qui agit aussi en tant que base pour un autre groupe. Cette notification être alors relayée dans ces autres groupes par le biais des balises transmises par les bases de ces groupes. La notification peut être à nouveau relayée de manière à être diffusée dans l'ensemble de l'arbre de communication via les balises émises par les bases des groupes.

Les noeuds de communication peuvent ainsi s'affranchir du caractère hiérarchique de l'arbre de communication et transmettre des messages et informations sans passer par la base auquel il est attaché, et ce en utilisant la ressource de transmission commune au voisinage réseau. L'ensemble des noeuds de communication est ainsi autorisé à accéder à la ressource de transmission commune au voisinage réseau sélectionnée et notifiée par le noeud maître 2.1.

Dans un mode particulier de réalisation, l'étape 4.1 est effectuée pour chaque trame 1.1 et une nouvelle ressource de transmission commune au voisinage réseau est sélectionnée, puis notifiée, en cas de changement de conditions de transmission impliquant qu'au moins une unité élémentaire de communication 1.6 de la ressource de transmission commune au voisinage réseau précédemment allouée n'est plus utilisable.

La Fig. 5 illustre schématiquement un premier algorithme d'utilisation de la ressource de transmission commune au voisinage réseau.

Selon un premier exemple de réalisation, la ressource de transmission commune au voisinage réseau est utilisée pour diffuser des messages comportant des informations de synchronisation et/ou des informations concernant la topologie du réseau constitué par les noeuds de communication. Dans une étape 5.1, le noeud de communication considéré génère un tel message. Ce message, dit de voisinage, peut comporter :
- un champ comportant un identifiant du noeud de communication considéré ;
- un champ comportant un identifiant du groupe auquel le noeud de communication considéré appartient ;
- un champ comportant un identifiant d'unité élémentaire de communication 1.6 dans laquelle le noeud de communication considéré transmet une balise, lorsque le noeud de communication considéré agit en tant que base ;
- un champ comportant une liste d'identifiants d'un nombre prédéfini de noeuds de communication qui sont les plus proches du noeud de communication considéré, c'est-à-dire ceux pour lesquels l'énergie des signaux reçus est la plus élevée ;
- un champ comportant un identifiant de la base à laquelle le noeud de communication considéré est éventuellement attaché ;
- un champ comportant un indicateur de qualité de transmission de signal, ou d'estimation de distance, entre le noeud de communication considéré et la base à laquelle il est éventuellement attaché ;
- un champ comportant une indication d'encombrement de la cellule, lorsque le noeud de communication considéré agit en tant que base.

Lorsqu'un noeud de communication reçoit de tels messages via la ressource de transmission commune au voisinage réseau, cela lui permet de se situer au sein du système de communication et de connaître ses voisins réseaux, c'est-à-dire ceux avec lesquels une communication directe peut être établie. Une utilisation de ces messages par un noeud de communication pour se resynchroniser est décrite ci-après en relation avec la Fig. 7.

Dans une étape 5.2 suivante, le noeud considéré détermine quelle est la ressource de transmission commune au voisinage réseau dans la trame 1.1. Cette information est obtenue suite à la notification transmise à l'étape 4.3.

Dans une étape 5.3 suivante, le noeud de communication considéré diffuse via la ressource de transmission commune au voisinage réseau le message généré à l'étape 5.1.

Les diffusions via la ressource de transmission commune au voisinage réseau peuvent être réalisées de manière prédéterminée suivant une séquence figée à l'avance ou de manière aléatoire ou pseudo aléatoire.

Selon un second exemple de réalisation, la ressource de transmission commune au voisinage réseau est utilisée par un noeud de communication considéré pour diffuser un message de découverte, appelé message *hello,* pour indiquer aux autres noeuds de communication qu'il est à la recherche d'une base à laquelle s'attacher. Ce noeud de communication considéré peut alors recevoir en réponse via la ressource de transmission commune au voisinage réseau au moins un message de voisinage, tel que précédemment mentionné, diffusé par le(s) noeud(s) du voisinage réseau ayant reçu le message *hello.*

D'autres messages de contrôle de topologie peuvent ainsi être transmis selon l'un et/ou l'autre de ces exemples de réalisation.

La Fig. 6 illustre schématiquement un second algorithme d'utilisation de la ressource de transmission commune au voisinage réseau. La ressource de transmission commune au voisinage réseau est alors utilisée pour diffuser des informations quant aux conditions de transmission et ainsi accélérer leur diffusion dans le système de communication.

Dans une étape 6.1, le noeud de communication considéré détecte un changement de conditions de transmission, ou du moins détermine ces conditions. Notamment lorsque ces conditions de transmission peuvent entraîner la perte d'au moins un canal de transmission, le noeud de communication considéré détermine quelle est la ressource de transmission commune au voisinage réseau dans la trame 1.1, dans une étape 6.2 suivante. Cette information est obtenue suite à la notification transmise à l'étape 4.3.

Dans une étape 6.3 suivante, le noeud de communication considéré diffuse via la ressource de transmission commune au voisinage réseau un message comportant des informations représentatives des conditions de transmission, ou des changements de conditions de transmission, déterminées à l'étape 6.1.

Un tel mode de diffusion via la ressource de transmission commune au voisinage réseau est particulièrement efficace lorsqu'il y a perte du canal de communication entre le noeud de communication considéré et la base à laquelle il est attaché ou entre le noeud de communication considéré et le(s) combiné(s) qui lui est (sont) attaché(s).

Lorsque les changements de conditions de transmission concernent une dégradation des transmissions via la ressource commune de voisinage réseau, le noeud de communication considéré transmet le message jusqu'au noeud maître 2.1 en utilisant une remontée, de base en base, de l'arbre de communication.

Lorsque les changements de conditions de transmission concernent une dégradation des transmissions via une partie de la ressource commune de voisinage réseau, le noeud de communication considéré transmet le message via l'autre partie de la ressource commune de voisinage réseau.

Le procédé de la Fig. 6 peut en outre être utilisé par une base pour indiquer aux noeuds du voisinage réseau qu'elle est congestionnée.

La Fig. 7 illustre schématiquement un algorithme de resynchronisation utilisant des informations diffusées via la ressource de transmission commune au voisinage réseau.

Dans une étape 7.1, le noeud de communication considéré détecte une perte de canal de communication avec la base à laquelle il est attaché.

Dans une étape 7.2 suivante, le noeud de communication considéré obtient des informations diffusées via la ressource de transmission commune au voisinage réseau et qui visent à permettre d'effectuer une resynchronisation sur une autre base. Ces informations sont celles contenues dans les messages de voisinage précédemment mentionnés en relation avec la Fig. 5. Comme déjà mentionné, ces messages peuvent être transmis périodiquement par les noeuds de communication ou être transmis en réponse à un message *hello* transmis par le noeud de communication considéré.

Dans une étape 7.3 suivante, le noeud de communication considéré utilise les informations contenues dans les messages de voisinage reçus pour établir un canal de communication avec une autre base.

La Fig. 8 illustre schématiquement un algorithme d'amélioration de connectivité du voisinage réseau utilisant des informations diffusées via la ressource de transmission commune au voisinage réseau.

Dans une étape 8.1, le noeud de communication considéré obtient des informations diffusées via la ressource de transmission commune au voisinage réseau et qui permettent d'obtenir une description de la topologie du réseau constitué par les noeuds de communication. Ces informations sont celles contenues dans les messages de voisinage précédemment mentionnés en relation avec la Fig. 5. Dans une variante de réalisation, le noeud de communication considéré reçoit d'un autre noeud de communication un message comportant une information de changement de conditions de transmission, comme indiqué précédemment en relation avec la Fig. 6.

Dans une étape 8.2 suivante, le noeud de communication considéré détecte une perte de connectivité avec un noeud de communication, c'est-à-dire que les messages reçus par le noeud de communication considéré montrent que le noeud de communication les ayant transmis a détecté une baisse de qualité de communication pouvant entraîner la perte d'au moins un canal de communication.

Dans une étape 8.3 suivante, le noeud de communication considéré vérifie s'il n'a pas déjà le rôle d'une base, et si ce n'est pas le cas, il prend le rôle d'une base et active une balise en conséquence.

Dans une étape 8.4 suivante, le noeud de communication considéré diffuse via la ressource de transmission commune au voisinage réseau un message de voisinage, tel que présenté précédemment en relation avec la Fig. 5, indiquant l'activation de cette balise et fournissant les informations permettant la synchronisation.

Dans un mode de réalisation particulier, outre la mise en oeuvre d'une ressource de transmission commune au voisinage réseau, chaque base peut mettre en oeuvre une ressource de transmission commune à sa cellule, et autoriser les combinés de sa cellule à accéder à cette ressource.

La ressource de transmission commune à une cellule est préférentiellement l'unité élémentaire de communication 1.6 qui est la complémentaire dans la seconde partie 1.3 de celle utilisée dans la première partie 1.2 de la trame 1.1 par la base pour transmettre les signaux de balise. Dans la représentation de la Fig. 1, pour des signaux de balise transmis sur une fréquence porteuse donnée dans un intervalle de temps N, la ressource de transmission commune à la cellule correspond à l'intervalle de temps N+12 pour cette même fréquence porteuse. Cette ressource de transmission commune concerne les combinés de la cellule et a une position prédéfinie relativement à une ressource utilisée par la base pour transmettre un signal de balise. Son accès est, pour les combinés de la cellule, similaire à celui de la ressource commune de voisinage réseau. Il peut aussi être séquentiellement prédéfini dans le temps.

La ressource de transmission commune à une cellule peut être utilisée par un noeud de communication de cette cellule pour diffuser un message de voisinage, tel que présenté précédemment en relation avec la Fig. 5. Le noeud de communication agissant en tant que base pour cette cellule peut relayer les informations transmises via la ressource de transmission commune aux autres noeuds de la cellule. Le noeud de communication agissant en tant que base pour cette cellule peut relayer les informations transmises via la ressource de transmission commune au niveau hiérarchique supérieur. Cela est par exemple le cas lorsque la ressource de transmission commune à la cellule est utilisée pour diffuser des informations relatives aux conditions, ou changements de conditions, de transmission.

Le noeud de communication agissant comme base peut détecter une situation de brouillage, de masquage rapide ou d'atténuation rapide, grâce aux messages de voisinage transmis par les combinés de sa cellule, et ainsi décider de changer d'unité élémentaire de communication 1.6 pour transmettre sa balise. Le même procédé peut être mis en oeuvre à partir de messages de voisinage transmis par les combinés de cette cellule via la ressource de transmission commune au voisinage réseau.

Dans un mode de réalisation particulier, les bases du système de communication sont adaptées pour ne pas transmettre leur balise dans le(s) même(s) intervalle(s) de temps que la ressource de transmission commune au voisinage réseau. Lorsqu'une base change d'unité élémentaire de communication 1.6 pour transmettre sa balise, elle s'assure préférentiellement de sélectionner un intervalle de temps distinct de celui ou ceux de la ressource de transmission commune au voisinage réseau. Lorsque le noeud maître change d'unité élémentaire de communication 1.6 pour définir la ressource de transmission commune au voisinage réseau, il s'assure préférentiellement de sélectionner un intervalle de temps distinct de ceux utilisés par les bases pour transmettre leur balises. Une telle information peut être remontée au noeud maître par remontée de l'arbre hiérarchique.

## Revendications

1. Système de communication comportant des noeuds de communication (2.1;2.2;2.3;2.4;2.5;2.6) communiquant par le biais de trames (1.1) de type à accès multiple par division temporelle et par division fréquentielle, lesdits noeuds formant un réseau radio cellulaire hiérarchique comportant plusieurs niveaux hiérarchiques, chaque niveau hiérarchique comportant chacun une base (2.3) et au moins un combiné (2.4;2.5) attaché à ladite base dudit niveau hiérarchique et pouvant servir de base à un niveau hiérarchique inférieur, ledit système étant adapté de sorte que chaque base dudit réseau sert de relais entre les noeuds de communication, soit au sein du niveau hiérarchique pour lequel elle agit en tant que base, soit entre le niveau hiérarchique dans lequel elle agit en tant que base et celui, s'il existe, dans lequel elle agit comme combiné, le système étant tel qu'un noeud de communication (2.1), dit noeud maître, comporte :
- des moyens pour sélectionner (4.2) dans chacune desdites trames une ressource de transmission commune auxdits noeuds de communication, dite ressource de transmission commune au voisinage réseau, le voisinage réseau étant l'ensemble des noeuds de communication habilités à communiquer par le biais d'une même trame; et,
- des moyens pour diffuser (4.3) auxdits noeuds de communication, au travers des niveaux hiérarchiques via leurs bases respectives, une information représentative de la ressource de transmission commune sélectionnée,
**caractérisé en ce que** ledit système est adapté pour autoriser lesdits noeuds de communication à diffuser des messages via la ressource de transmission commune sélectionnée.

2. Système de communication selon la revendication 1, **caractérisé en ce que** ledit noeud maître comporte des moyens pour obtenir (4.1) des informations représentatives de conditions de transmission entre lesdits noeuds de communication et **en ce que** les moyens pour sélectionner la ressource de transmission commune au voisinage réseau sont adaptés pour effectuer la sélection en fonction desdites informations obtenues.

3. Système de communication selon la revendication 2, **caractérisé en ce que** chaque noeud de communication comporte des moyens pour déterminer (6.1) des conditions de transmission dans ledit système de communication et des moyens pour transmettre (6.3) des messages comportant des informations représentatives de conditions de transmission, ou de changement de conditions de transmission soit via la ressource de transmission commune au voisinage réseau, soit via la base de leur niveau hiérarchique à laquelle il est attaché.

4. Système de communication selon l'une quelconque des revendications 1 à 3, **caractérisé en ce que** lesdits noeuds de communication comportent des moyens pour diffuser (5.3) via la ressource de transmission commune au voisinage réseau des messages comportant des informations de synchronisation identifiant une ressource desdites trames utilisée pour transmettre un signal de balise.

5. Système de communication selon l'une quelconque des revendications 1 à 4, **caractérisé en ce que**, lesdits noeuds de communication comportant des fonctions de combiné et de base, lesdits noeuds de communication comportent :
- des moyens pour détecter (8.2) un risque de perte de connectivité avec un autre noeud de communication,
- des moyens pour activer (8.3) un signal de balise, lorsqu'un risque de perte de connectivité est détecté ;
- des moyens pour diffuser (8.4) via la ressource de transmission commune au voisinage réseau un message comportant des informations de synchronisation identifiant une ressource desdites trames, utilisée pour transmettre ledit signal de balise.

6. Système de communication selon l'une quelconque des revendications 1 à 5, **caractérisé en ce que** la base de chaque niveau hiérarchique comporte des moyens pour autoriser le ou les noeuds de communication de son niveau hiérarchique à diffuser des messages via une ressource de transmission commune audit niveau hiérarchique.

7. Système de communication selon la revendication 6, **caractérisé en ce que** la ressource de transmission commune à chaque niveau hiérarchique correspond à une ressource desdites trames ayant une position prédéfinie relativement à une ressource utilisée par la base dudit niveau hiérarchique pour transmettre un signal de balise.

8. Système de communication selon l'une quelconque des revendications 6 et 7, **caractérisé en ce que** la base de chaque niveau hiérarchique comporte des moyens pour changer de ressource desdites trames, utilisée pour transmettre un signal de balise, en fonction de messages reçus via la ressource de transmission commune à son niveau hiérarchique ou via la ressource de transmission commune au voisinage réseau.

9. Système de communication selon l'une quelconque des revendications 6 à 8, **caractérisé en ce que** ledit système est adapté de sorte que les bases transmettent leur signal de balise dans un intervalle de temps distinct de chaque intervalle de temps définissant la ressource de transmission commune au voisinage réseau.

10. Procédé de communication dans un système de communication comportant des noeuds de communication (2.1;2.2;2.3;2.4;2.5;2.6) communiquant par le biais de trames (1.1) de type à accès multiple par division temporelle et par division fréquentielle, lesdits noeuds formant un réseau radio cellulaire hiérarchique comportant plusieurs niveaux hiérarchiques, chaque niveau hiérarchique comportant chacun une base (2.3) et au moins un combiné (2.4;2.5) attaché à ladite base dudit niveau hiérarchique et pouvant servir de base à un niveau hiérarchique inférieur, ledit système étant adapté de sorte que chaque base dudit réseau sert de relais entre les noeuds de communication, soit au sein du niveau hiérarchique pour lequel elle agit en tant que base, soit entre le niveau hiérarchique dans lequel elle agit en tant que base et celui, s'il existe, dans lequel elle agit comme combiné, le procédé est tel qu'un noeud de communication (2.1), dit noeud maître, effectue des étapes consistant à :
- sélectionner (4.2) dans chacune desdites trames une ressource de transmission commune auxdits noeuds de communication, dite ressource de transmission commune au voisinage réseau, le voisinage réseau étant l'ensemble des noeuds de communication habilités à communiquer par le biais d'une même trame ;
- diffuser (4.3) auxdits noeuds de communication, au travers des niveaux hiérarchiques via leurs bases respectives, une information représentative de la ressource de transmission commune sélectionnée ; et
**caractérisé en ce que** ledit procédé est tel que lesdits noeuds de communication sont autorisés à diffuser des messages via la ressource de transmission commune sélectionnée.

11. Programme d'ordinateur, **caractérisé en ce qu'**il comprend des instructions pour mettre en oeuvre, par un noeud de communication, le procédé selon la revendication 10, lorsque ledit programme est exécuté par un processeur (3.2) dudit noeud de communication.

12. Moyens de stockage, **caractérisés en ce qu'**ils stockent un programme d'ordinateur comprenant des instructions pour mettre en oeuvre, par un noeud de communication, le procédé selon la revendication 10, lorsque ledit programme est exécuté par un processeur (3.2) dudit noeud de communication.

## Patentansprüche

1. Kommunikationssystem umfassend Kommunikationsknoten (2.1 ; 2.2 ; 2.3 ; 2.4 ; 2.5 ; 2.6), die über Rahmen (1.1) von der Art mit Vielfachzugriff durch Zeitteilung und durch Frequenzteilung kommunizieren, wobei die genannten Knoten ein, mehrere hierarchische Ebenen enthaltendes hierarchisches zellulares Funknetzwerk bilden, wobei jede hierarchische Ebene jeweils eine Basis (2.3) umfasst, sowie wenigstens eine, an die genannte Basis der genannten hierarchischen Ebene angebundene Teilnehmerstation (2.4; 2.5), das zudem als Basis einer darunterliegenden hierarchischen Ebene dienen kann, wobei das genannte System derart ausgelegt ist, dass jede Basis des genannten Netzwerks als Relais zwischen den Kommunikationsknoten dient und zwar entweder auf der hierarchischen Ebene, für die sie als Basis fungiert, oder zwischen der hierarchischen Ebene, auf der sie als Basis fungiert, und derjenigen, falls vorhanden, auf der sie als Teilnehmerstation fungiert, wobei das System derart ausgelegt ist, dass ein Kommunikationsknoten (2.1), genannt Master-Knoten, folgendes umfasst:
- Mittel, um in jedem der genannten Rahmen eine gemeinsame Übertragungsressource der Kommunikationsknoten, genannt gemeinsame Übertragungsressource der Netzwerkumgebung, auszuwählen (4.2), wobei die Netzwerkumgebung der Gesamtheit der Kommunikationsknoten entspricht, die zur Kommunikation über einen selben Rahmen autorisiert sind, und
- Mittel, um eine, für die gewählte gemeinsame Übertragungsressource räpresentative Information durch die hierarchischen Ebenen, über deren jeweilige Basis an die Kommunikationsknoten zu verbreiten (4.3),
**dadurch gekennzeichnet, dass** das genannte System ausgelegt ist, um die genannten Kommunikationsknoten zu autorisieren, Nachrichten über die gewählte gemeinsame Übertragungsressource zu verbreiten.

2. Kommunikationssystem nach Patentanspruch 1, **dadurch gekennzeichnet, dass** der genannte Master-Knoten Mittel umfasst, um Informationen, die für Übertragungsverhältnisse zwischen den genannten Kommunikationsknoten räpresentativ sind, zu erhalten (4.1) und dadurch, dass die Mittel zum Auswählen der gemeinsamen Übertragungsressource der Netzwerkumgebung geeignet sind, die Auswahl in Abhängigkeit von den genannten erhaltenen Informationen zu treffen.

3. Kommunikationssystem nach Patentanspruch 2, **dadurch gekennzeichnet, dass** jeder Kommunikationsknoten Mittel umfasst, um Übertragungsverhältnisse in dem genannten Kommunikationssystem festzulegen (6.1), sowie Mittel, um Nachrichten, die für Übertragungsverhältnisse oder Änderungen derselben räpresentative Informationen beinhalten, entweder über die gemeinsame Übertragungsressource der Netzwerkumgebung oder über die Basis der hierarchischen Ebene, an die der jeweilige Kommunikationsknoten angebunden ist, zu übertragen (6.3).

4. Kommunikationssystem nach einem der Patentansprüche 1 bis 3, **dadurch gekennzeichnet, dass** die genannten Kommunikationsknoten Mittel umfassen, um über die gemeinsame Übertragungsressource der Netzwerkumgebung Nachrichten zu verbreiten (5.3), die eine Ressource der genannten, zur Übertragung eines Bakensignals genutzten Rahmen identifizierende Synchronisierungsinformationen beinhalten.

5. Kommunikationssystem nach einem der Patentansprüche 1 bis 4, **dadurch gekennzeichnet, dass** die genannten Kommunikationsknoten, denen Teilnehmerstations- und Basis-Funktionen innewohnen, folgendes umfassen :
- Mittel zur Detektion (8.2) der Gefahr eines Verlusts der Konnektivität zu einem anderen Kommunikationsknoten ;
- Mittel zur Aktivierung (8.3) eines Bakensignals, wenn die Gefahr eines Konnektivitätsverlusts detektiert wird,
- Mittel zur Verbreitung (8.4) über die gemeinsame Übertragungsressource der Netzwerkumgebung einer Nachricht, die, eine Ressource der genannten zur Übertragung eines Bakensignals genutzten Rahmen identifizierende Synchronisierungsinformationen beinhaltet.

6. Kommunikationssystem nach einem der Patentansprüche 1 bis 5, **dadurch gekennzeichnet, dass** die Basis jeder hierarchischen Ebene Mittel umfasst, um den oder die Kommunikationsknoten ihrer hierarchischen Ebene zu autorisieren, Nachrichten über die gemeinsame Übertragungsressource der genannten hierarchischen Ebene zu verbreiten.

7. Kommunikationssystem nach Patentanspruch 6, **dadurch gekennzeichnet dass** die gemeinsame Übertragungsressource jeder hierarchischen Ebene einer Ressource der genannten Rahmen entspricht, die eine vorgegebene Position in Bezug auf eine, von der Basis der genannten hierarchischen Ebene genutzten Ressource innehat, um ein Bakensignal zu übertragen.

8. Kommunikationssystem nach einem der Patentansprüche 6 und 7, **dadurch gekennzeichnet, dass** die Basis jeder hierarchischen Ebene Mittel umfasst, um die, zur Übertragung eines Bakensignals genutzte Ressource der genannten Rahmen in Abhängigkeit von, über die gemeinsame Übertragungsressource ihrer hierarchischen Ebene oder über die gemeinsame Übertragungsressource der Netzwerkumgebung erhaltenen Nachrichten zu wechseln.

9. Kommunikationssystem nach einem der Patentansprüche 6 bis 8, **dadurch gekennzeichnet, dass** das genannte System derart ausgelegt ist, dass die Basen ihr Bakensignal in einem Zeitintervall übertragen, das von jedem, die gemeinsame Übertragungsressource der Netzwerkumgebung definierenden Zeitintervall getrennt ist.

10. Kommunikationsverfahren in einem Kommunikationssystem umfassend Kommunikationsknoten (2.1 ; 2.2 ; 2.3 ; 2.4 ; 2.5 ; 2.6), die über Rahmen (1.1) von der Art mit Vielfachzugriff durch Zeitteilung und durch Frequenzteilung kommunizieren, wobei die genannten Knoten ein, mehrere hierarchische Ebenen enthaltendes hierarchisches zellulares Funknetzwerk bilden, wobei jede hierarchische Ebene jeweils eine Basis (2.3) umfasst, sowie wenigstens eine, an die genannte Basis der genannten hierarchischen Ebene angebundende Teilnehmerstation (2.4; 2.5), die zudem als Basis einer darunterliegenden hierarchischen Ebene dienen kann, wobei das genannte System derart ausgelegt ist, dass jede Basis des genannten Netzwerks als Relais zwischen den Kommunikationsknoten dient und zwar entweder auf der hierarchischen Ebene, für die sie als Basis fungiert, oder zwischen der hierarchischen Ebene, auf der sie als Basis fungiert, und derjenigen, falls vorhanden, auf der sie als Teilnehmerstation fungiert, wobei das System derart ausgelegt ist, dass ein Kommunikationsknoten (2.1), genannt Master-Knoten, folgendes umfasst:
- Mittel, um in jedem der genannten Rahmen eine gemeinsame Übertragungsressource der Kommunikationsknoten, genannt gemeinsame Übertragungsressource der Netzwerkumgebung, auszuwählen (4.2), wobei die Netzwerkumgebung der Gesamtheit der Kommunikationsknoten entspricht, die zur Kommunikation über einen selben Rahmen autorisiert sind, und
- Mittel, um eine, für die gewählte gemeinsame Übertragungsressource räpresentative Information durch die hierarchischen Ebenen, über deren jeweilige Basis an die Kommunikationsknoten zu verbreiten (4.3),
**dadurch gekennzeichnet, dass** das genannte System derart ausgelegt ist, dass die genannten Kommunikationsknoten autorisiert sind, Nachrichten über die ausgewählte gemeinsame Übertragungsressource zu verbreiten.

11. Computerprogramm, **dadurch gekennzeichnet, dass** es Instruktionen umfasst, um das Verfahren nach Patentanspruch 10 durch einen Kommunikationsknoten umzusetzen, wenn das genannte Programm durch einen Prozessor (3.2) des genannten Kommunikationsknotens ausgeführt wird.

12. Speichermittel, **dadurch gekennzeichnet, dass** sie ein Computerprogramm speichern, das Instruktionen umfasst, um das Verfahren nach Patentanspruch 10 durch einen Kommunikationsknoten umzusetzen, wenn das genannte Programm durch einen Prozessor (3.2) des genannten Kommunikationsknotens ausgeführt wird.

## Claims

1. Communication system comprising communication nodes (2.1; 2.2; 2.3; 2.4; 2.5; 2.6) communicating by means of frames (1.1) of time division and frequency division multiple access type, said nodes forming a hierarchical cellular radio network comprising various hierarchical levels, each hierarchical level comprising a base (2.3) and at least one handset (2.4; 2.5) attached to said base of said hierarchical level and that may be acting as a base for a lower hierarchical level, said system being adapted so that each base of said network is acting as a relay between the communication nodes, either within the hierarchical level for which it acts as a base or between the hierarchical level in which it acts as a base and the one, if such exists, in which it acts as a handset, the system being as such a communication node (2.1), referred to as *master node,* comprises:
- means for selecting (4.2) in each of said frames a transmission resource common to said communication nodes, referred to as transmission resource common to network neighbourhood, the network neighbourhood being all the communication nodes allowed to communicate by means of a same frame ; and,
- means for broadcasting (4.3) to said communication nodes, through the hierarchical levels via their respective bases, information representative of the selected common transmission resource,
**characterized in that** said system is adapted to allow said communication nodes to broadcast messages via the selected common transmission resource.

2. Communication system according to claim 1, **characterised in that** said master node comprises means for obtaining (4.1) information representative of transmission conditions between said communication nodes and **in that** the means for selecting the transmission resource common to the network neighbourhood are adapted to perform the selection according to said obtained information.

3. Communication system according to claim 2, **characterised in that** each communication node comprises means for determining (6.1) transmission conditions in said communication system and means for transmitting (6.3) messages comprising information representative of transmission conditions, or changes in transmission conditions, either via the transmission resource common to the network neighbourhood or via the base of their hierarchical level.

4. Communication system according to any one of claims 1 to 3, **characterised in that** said communication nodes comprise means for broadcasting (5.3), via the transmission resource common to the network neighbourhood, messages comprising synchronisation information identifying a resource of said frames used for transmitting a beacon signal.

5. Communication system according to any one of claims 1 to 4, **characterised in that**, said communication nodes comprising handset and base functions, said communication nodes comprise:
- means for detecting (8.2) a risk of loss of connectivity with another communication node,
- means for activating (8.3) a beacon signal, when a risk of loss of connectivity is detected;
- means for broadcasting (8.4), via the transmission resource common to the network neighbourhood, a message comprising synchronisation information identifying a resource of said frames, used for transmitting said beacon signal.

6. Communication system according to any one of claims 1 to 5, **characterised in that** the base of each hierarchical level comprises means for allowing the communication nodes of its hierarchical level to broadcast messages via a transmission resource common to said hierarchical level.

7. Communication system according to claim 6, **characterised in that** the transmission resource common to each hierarchical level corresponds to a resource of said frames having a predefined position relative to a resource used by the base of said hierarchical level to transmit a beacon signal.

8. Communication system according to either one of claims 6 and 7, **characterised in that** the base of each hierarchical level comprises means for changing resource of said frames, used for transmitting a beacon signal, according to messages received via the transmission resource common to its hierarchical level or via the transmission resource common to the network neighbourhood.

9. Communication system according to any one of claims 6 to 8, **characterised in that** said system is adapted so that the bases transmit their beacon signal in a time slot distinct from each time slot defining the transmission resource common to the network neighbourhood.

10. Communication method in a communication system comprising communication nodes (2.1; 2.2; 2.3; 2.4; 2.5; 2.6) communicating by means of frames (1.1) of time division and frequency division multiple access type, said nodes forming a hierarchical cellular radio network comprising various hierarchical levels, each hierarchical level comprising a base (2.3) and at least one handset (2.4; 2.5) attached to said base of said hierarchical level and that may be acting as a base for a lower hierarchical level, said system being adapted so that each base of said network is acting as a relay between the communication nodes, either within the hierarchical level for which it acts as a base or between the hierarchical level in which it acts as a base and the one, if such exists, in which it acts as a handset, the method being as such a communication node (2.1), referred to as *master node,* performs steps consisting of:
- selecting (4.2) in each of said frames a transmission resource common to said communication nodes, referred to as transmission resource common to the network neighbourhood, the network neighbourhood being all the communication nodes allowed to communicate by means of a same frame ;
- broadcasting (4.3) to said communication nodes, through the hierarchical levels via their respective bases, information representative of the selected common transmission resource; and,
**characterized in that** said method is such that said communication nodes are allowed to broadcast messages via the selected common transmission resource.

11. Computer program, **characterised in that** it comprises instructions for implementing, by a communication node, the method according to claim 10, when the program is executed by a processor (3.2) of said communication node.

12. Storage means, **characterised in that** they store a computer program comprising instructions for implementing, by a communication node, the method according to claim 10, when said program is executed by a processor (3.2) of said communication node.
